# EUROPÄISCHE PATENTANMELDUNG

(11) **EP 3 693 147 A1**
(43) Veröffentlichungstag der Anmeldung: **12.08.2020**
(21) Anmeldenummer: 19156291.7
(22) Anmeldetag: 08.02.2019
(51) Int. Cl.: B29C 45/16, B29C 44/06, B65D 1/26

(54) **BEHÄLTER AUS SPRITZGEGOSSENEM KUNSTSTOFF UND VERFAHREN ZUM HERSTELLEN DESSELBEN**

(71) Anmelder: Rotho Kunststoff AG, 5303 Würenlingen (CH)
(72) Erfinder: THOMA, Christian, 79774 Albbruck (DE); MEIER, Bruno, 5417 Untersiggenthal (CH); BINDER, Marc, 5333 Baldingen (CH); ERNI, Heiner, 5080 Laufenburg (CH); LOPES VIEIRA, Ruben, 5322 Koblenz (CH); ERNST, Andreas, 5454 Bellikon (CH); MARCIGOT, Luca, 5408 Ennetbaden (CH); ÖMER, Ölmez, 5505 Brunegg (CH)
(74) Vertreter: Lemcke, Brommer & Partner Patentanwälte Partnerschaft mbB

(57) **Zusammenfassung**

Die Erfindung betrifft einen Behälter aus spritzgegossenem Kunststoff. Dieser besteht im Wesentlichen aus einer Behälterwand 1, die einen Innenraum 8 des Behälters definiert, mit einer ersten Kunststoffkomponente, aus der ein Skelett 5 mit einer Bodenfläche 2 und mehreren an diesen angeformten Streben 6 und/oder Teilflächen 7 gebildet ist, sowie mit mindestens einer zweiten Kunststoffkomponente 9, die das Skelett 5 zur Behälterwand 1 vervollständigt. Das Skelett 5 besteht aus aufgeschäumtem Kunststoff.

Die Erfindung betrifft außerdem ein Verfahren zur Herstellung eines solchen Behälters in einer einzigen Spritzgussform in Zweikomponenten-Spritzgusstechnik oder in zwei Spritzgussformen, wobei jeweils die erste Kunststoffkomponente vor dem Einspritzen mit einem Gas, insbesondere CO₂ versetzt wird, das sich beim Einspritzvorgang nach dem Verlassen der ersten Spritzeinheit 15 in der Kavität 16 ausdehnt und hierbei ein Aufschäumen der ersten Kunststoffkomponente bewirkt.

## Beschreibung

Die Erfindung betrifft einen Behälter aus spritzgegossenem Kunststoff, im Wesentlichen bestehend aus einer Behälterwand, die einen Innenraum des Behälters definiert, nach dem Oberbegriff des Anspruchs 1. Die Erfindung betrifft außerdem ein Verfahren zum Herstellen eines solchen Behälters nach dem Oberbegriff des Anspruchs 8 bzw. nach dem Oberbegriff des Anspruchs 12.

Ein Behälter der vorliegenden Art kann die unterschiedlichsten Formen aufweisen; meist wird der Behälter aus einer Behälterwand gebildet sein, die schalen- oder wannenförmig ist und einen nach oben offenen Innenraum definiert, welcher mit einem Deckel verschlossen werden kann. Die Behälterwand besteht dann aus einem Boden und einer Seitenwandung, die je nach Grundform des Bodens abgerundet, ausgebaucht, n-eckig und dergleichen mehr sein kann. Daneben liegen jedoch auch andere Formen eines Behälters, wie beispielsweise eine Flasche, im Rahmen der vorliegenden Erfindung.

Ein Behälter der vorliegenden Art, der in Form eines Aufbewahrungsbehälters für den Haushalt aus der JP-A-2000-247366 bekannt geworden ist, besteht aus zwei Kunststoffkomponenten, wobei eine erste Kunststoffkomponente ein Skelett mit einer Bodenfläche und mehreren an diese angeformten Teilflächen sowie einen umlaufenden oberen Rand bildet, während eine zweite Kunststoffkomponente das Skelett zur Behälterwand vervollständigt und hierbei transparente Fenster ausbildet. Durch diese transparenten Fenster kann der Inhalt des Behälters von außen eingesehen werden. Dadurch, dass sie innerhalb einer Seitenfläche eines in seiner Grundform quaderförmigen Behälters angeordnet sind, sind die transparenten Fenster gleichzeitig vor Verkratzen und sonstigen Beschädigungen geschützt, die den Durchblick beeinträchtigen könnten.

Die Herstellung eines Behälters der vorliegenden Art erfolgt in einem Verfahren, nach dem zunächst das Skelett mit Bodenfläche und angeformten Teilflächen aus der ersten Kunststoffkomponente ausgeformt wird. Hierfür wird die erste Kunststoffkomponente durch Erhitzen plastifiziert, d.h. in einen fließfähigen Zustand gebracht, diese Schmelze unter Druck über eine Spritzeinheit in eine die Form des Skeletts bildende Kavität einer teilbaren Spritzgussform eingespritzt und darin durch Abkühlen verfestigt. Danach wird die Kavität zur Gesamtform der Behälterwand erweitert, oder aber die teilbare Spritzgussform wird geöffnet, das erstarrte Skelett entnommen und in eine Kavität einer zweiten teilbaren Spritzgussform eingelegt, welche dann die vervollständigte Gesamtform der Behälterwand umschreibt.

Eine zweite Kunststoffkomponente wird ebenfalls durch Erhitzen plastifiziert, unter Druck in die erweiterte Kavität oder in die Kavität der zweiten Spritzgussform eingespritzt und darin durch Abkühlen verfestigt, um das Skelett zur Behälterwand zu vervollständigen.

Durch das direkte Anspritzen der zweiten Kunststoffkomponente an die bereits erstarrte oder im Erstarren befindliche erste Kunststoffkomponente ergibt sich eine stoffschlüssige Verbindung zwischen den beiden Kunststoffkomponenten, so dass der fertige Behälter wie "aus einem Guss" erscheint und entsprechende Eigenschaften aufweist.

Ein Beispiel für ein entsprechendes Verfahren zum Herstellen eines Kunststoffartikels aus zwei unterschiedlichen Kunststoffkomponenten gemäß der ersten genannten Alternative, also in einer einzigen Spritzgussform (Zweikomponenten-Spritzgusstechnik) ist in der EP-A-1 571 099 beschrieben.

Behälter der vorliegenden Art müssen vor allem dann, wenn sie schalen- oder wannenförmig sind, in aller Regel durch Abkantungen und Stabilisierungsrippen verstärkt werden, um eine hinreichende Formstabilität zu gewährleisten. Denn die zur Herstellung des Behälters verwendete Kunststoffmenge ist ein relevanter Faktor bei den Herstellungskosten. Auch aus Gründen der Nachhaltigkeit ist man stets bestrebt, möglichst wenig Material zu verwenden; der Energiebedarf und damit der Carbon-Footprint sowie der Verbrauch von Ressourcen ist naturgemäß direkt proportional zur Menge des verwendeten Kunststoffmaterials. Die Behälterwand sollte daher möglichst dünnwandig ausgebildet sein.

Die Wandstärke der Behälterwand hat daneben auch direkten Einfluss auf die zum Erstarren und Abkühlen des Kunststoffmaterials benötigte Zeit, was über die Taktzeiten bei der Produktion des Behälters wiederum entscheidenden Einfluss auf die Herstellungskosten hat. Darüber hinaus ist das Verwenden von möglichst wenig Kunststoffmaterial zur Herstellung eines Behälters der vorliegenden Art auch hinsichtlich des Gewichts des Behälters wichtig, was sich in den Transportkosten beim Vertrieb des Behälters niederschlägt. Typische Wandstärken für eine Behälterwand eines Behälters der vorliegenden Art liegen daher bei 1,5 mm bis 1,6 mm.

Um aus Designgründen oder wegen der Handlingseigenschaften auf Stabilisierungsrippen und Abkantungen verzichten zu können, muss die Wandstärke der Behälterwand zumindest teilweise erhöht werden, um einen ausreichend eigenstabilen und wertigen Behälter zu erhalten. Hierdurch ergeben sich jedoch die oben aufgeführten Nachteile. Selbst dann, wenn nur das Skelett eines Behälters der vorliegenden Art mit einer größeren Wandstärke versehen wird und das Skelett in der Art einer tragenden Struktur ausgebildet ist, verbleibt insbesondere der Nachteil der langen Erstarrungs- und Abkühlzeiten im Herstellungsprozess.

Der vorliegenden Erfindung liegt daher die Aufgabe zugrunde, einen Behälter der eingangs genannten Art sowie ein Verfahren zum Herstellen eines solchen Behälters vorzuschlagen, bei dem bzw. mit dem der beschriebene Zielkonflikt nicht mehr auftritt.

Gelöst ist diese Aufgabe durch einen Behälter mit den Merkmalen des Anspruchs 1 sowie durch ein Verfahren mit den Merkmalen des Anspruchs 8 oder ein Verfahren mit den Merkmalen des Anspruchs 12. Vorteilhafte Ausgestaltungen des erfindungsgemäßen Behälters finden sich in den Ansprüchen 2 bis 7; bevorzugte Weiterbildungen des erfindungsgemäßen Verfahrens sind in den Ansprüchen 9 bis 11 sowie 13 und 14 niedergelegt.

Ein erfindungsgemäßer Behälter aus spritzgegossenem Kunststoff, mit einer ersten Kunststoffkomponente, aus der ein Skelett mit einer Bodenfläche und mehreren an diese angeformten Streben oder Teilflächen gebildet ist, sowie mit mindestens einer zweiten Kunststoffkomponente, die das Skelett zur Behälterwand vervollständigt, zeichnet sich demnach dadurch aus, dass das Skelett aus aufgeschäumtem Kunststoff besteht. Vorzugsweise besitzt dieses Skelett eine Materialstärke von mindestens 2 mm, vorzugsweise von 2,5 mm bis 4 mm, sowie besonders bevorzugt von ca. 3 mm, d.h. von 2,8 mm bis 3,2 mm.

Durch das Aufschäumen des Kunststoffs entsteht eine Behälterwand bzw. ein Skelett, das nach wie vor aus spritzgegossenem Kunststoff besteht und dessen typischen Materialeigenschaften aufweist. Durch eine Vielzahl von im Kunststoffmaterial eingeschlossenen Gasbläschen wird das pro Volumeneinheit erforderliche Material sowie das auf eine Volumeneinheit normierte Gewicht jedoch signifikant verringert, so dass die Wandstärke gegenüber den bislang typischen 1,6 mm deutlich erhöht werden kann, ohne den erforderlichen Materialaufwand, das Gewicht und die zum Erstarren und Abkühlen des Materials erforderliche Taktzeit bei der Herstellung nachteilig zu verändern.

Die Eigenstabilität des Skeletts wird durch eine höhere Wandstärke auch dann, wenn das Skelett aus aufgeschäumtem Kunststoff besteht, deutlich erhöht. Der oben angesprochene Zielkonflikt ist damit gelöst, und es ergibt sich ein ausreichend eigenstabiler, hochwertiger Behälter, bei dem weitgehend auf Stabilisierungsrippen und Abkantungen verzichtet werden kann. Hierdurch wächst auch die Gestaltungsfreiheit bei der Anordnung der zweiten Kunststoffkomponente, die beispielsweise über etwaige Ecken und Kanten des Behälters hinweg sowie insbesondere bis in den Boden des Behälters hineinreichen kann. In diesem Fall würde dann die Bodenfläche des Skeletts nicht mit der Gesamtfläche des Bodens des Behälters übereinstimmen, sondern kleiner ausfallen.

Um eine möglichst hohe Eigenstabilität des erfindungsgemäßen Behälters zu erzielen, ist es vorteilhaft, wenn das Skelett einen umlaufenden oberen Rand des Behälters umfasst (soweit der Behälter eine entsprechende Form mit einem oben umlaufenden Rand aufweist). Bei einer typischen Behälterform in der Grundform eines Quaders würde dann beispielsweise ein Skelett mit einer Bodenfläche und einem umlaufenden oberen Rand sowie relativ schmalen Streben zwischen der Bodenfläche und dem umlaufenden oberen Rand ausreichen, um eine sehr gute Eigenstabilität des Behälters zu gewährleisten.

Besondere Vorteile ergeben sich durch die erfindungsgemäße Ausgestaltung des Behälters dann, wenn die zweite Kunststoffkomponente ein transparenter Kunststoff ist, also transparente Fenster im fertigen Behälter ausbildet, wie sie an sich aus dem eingangs beschriebenen Stand der Technik bekannt sind. Dadurch, dass hierfür eine zweite Kunststoffkomponente zum Einsatz kommt, kann diese aus nicht-aufgeschäumtem Kunststoff bestehen, was naturgemäß für transparente Bestandteile der Behälterwand von größtem Vorteil ist. Denn die in einem aufgeschäumten Kunststoff eingeschlossenen Gasbläschen würden die transparente Eigenschaft beeinträchtigen und die transparente Komponente zu einer eher transluzenten Komponente machen.

Die zweite Kunststoffkomponente weist vorzugsweise eine Materialstärke von höchstens 1,8 mm, vorzugsweise von höchsten 1,5 mm, besonders bevorzugt ca. 1 mm, d.h. von 0,8 mm bis 1,2 mm auf. Eine möglichst dünnwandige Ausbildung verringert, wie oben ausgeführt, die Herstellungskosten und den Verbrauch von Ressourcen und hat dann, wenn es sich bei der zweiten Kunststoffkomponente um einen transparenten Kunststoff handelt, außerdem den Vorteil, dass hierdurch besonders durchsichtige Fenster entstehen. Bei einer geeigneten eigenstabilen Ausformung des Skeletts muss die zweite Kunststoffkomponente kaum einen Beitrag zur Eigenstabilität des Behälters leisten, so dass eine besonders geringe Wandstärke für die zweite Kunststoffkomponente ermöglicht wird.

Besonders bevorzugt ist der erfindungsgemäße Behälter in Zweikomponente-Spritzgusstechnik gefertigt, wodurch sich eine besonders gute stoffschlüssige Verbindung der beiden Kunststoffkomponenten ergibt, und zwar insbesondere dann, wenn, wie dies im Rahmen der vorliegenden Erfindung bevorzugt ist, die beiden Kunststoffkomponenten innerhalb der Behälterwand nicht stumpf aufeinandertreffen, sondern, senkrecht zur Behälterwandebene gesehen, sich signifikant überlappen.

Das erfindungsgemäße Verfahren zum Herstellen eines Behälters aus spritzgegossenem Kunststoff, der im Wesentlichen aus einer Behälterwand gebildet ist, die einen Innenraum des Behälters definiert, erfolgt in einer ersten Alternative in Zweikomponenten-Spritzgusstechnik. Hierzu wird zunächst aus einer ersten Kunststoffkomponente ein Skelett mit einer Bodenfläche und mehreren an diese angeformten Streben oder Teilflächen geformt, indem die erste Kunststoffkomponente in einer an sich bekannten Spritzgussmaschine durch Erhitzen plastifiziert, unter Druck über eine erste Spritzeinheit in eine Kavität einer teilbaren Spritzgussform eingespritzt und darin durch Abkühlen verfestigt wird. Die Kavität entspricht der Form des Skeletts, und die Spritzgussform besteht, wie an sich bekannt, aus einer Kernhälfte und einer Gesenkhälfte. Vorzugsweise noch während des Verfestigens der ersten Kunststoffkomponente wird die Kavität der Spritzgussform erweitert, so dass sie sich von der Form des Skeletts zur Form der gesamten Behälterwand verändert. Eine zweite Kunststoffkomponente wird ebenfalls durch Erhitzen plastifiziert, unter Druck über eine zweite Spritzeinheit in die erweiterte Kavität eingespritzt und darin durch Abkühlen verfestigt, wodurch sich das Skelett mit der zweiten Kunststoffkomponente zur Behälterwand vervollständigt.

Erfindungsgemäß wird die erste Kunststoffkomponente vor dem Einspritzen in die Kavität mit einem Gas versetzt. Das Einspritzen der ersten Kunststoffkomponente erfolgt unter hohem Druck (typischerweise über 500 bar), sodass sich die plastifizierte Masse beim Einfließen in die Kavität entspannt. Das Gas, mit dem die erste Kunststoffkomponente versetzt ist, bildet hierbei eine Vielzahl von Bläschen, so dass beim Einfließen der ersten Kunststoffkomponente in die Kavität ein Aufschäumen dieser ersten Kunststoffkomponente erfolgt.

Das Erweitern der Kavität von der Form des Skeletts zur Form der Behälterwand erfolgt bevorzugt mittels Schiebern, die zur Anwendung der Zweikomponenten-Spritzgusstechnik an sich bekannt sind. Vorzugweise sind diese Schieber an der Kernhälfte der Spritzgussform angeordnet. Dies ermöglicht, die erste und/oder zweite Spritzeinheit in der Gesenkhälfte anzuordnen und hierbei kurze Wege von der Spritzdüse bis zur Kavität zu realisieren.

Alternativ zu den üblichen Schiebern können im Rahmen der vorliegenden Erfindung auch bewegliche Absperrelemente verwendet werden, um Teile des Hohlraums zwischen der Kernhälfte und der Gesenkhälfte der Spritzgußform für den ersten Schuss mit der ersten Kunststoffkomponente abzusperren, so dass sie beim ersten Schuss nicht Teil der Kavität sind, in die das Kunststoffmaterial hieninfließt. Diese Absperrelemente sorgen somit dafür, dass die Kavität aufgrund der "stillgelegten" Teile des Hohlraums für die erste Kunststoffkomponente der Form des herzustellenden Skeletts entspricht, während das Zurückziehen der Absperrelemente aus dem Hohlraum die Kavität zur Form der gesamten Behälterwand erweitert. Solche Absperrelemente können beispielsweise die Form eines Rahmens aufweisen.

Insbesondere aufgrund der bevorzugten, unterschiedlichen Wandstärken der ersten und der zweiten Kunststoffkomponente wird die zweite Kunststoffkomponente bevorzugt durch mindestens einen Heißkanal eingespritzt. Dieser gewährleistet, dass die plastifizierte zweite Kunststoffkomponente ohne relevante Abkühlung durch das Angusssystem geleitet wird und somit auch dann, wenn längere Strecken zu unterschiedlichen Anspritzpunkten zurückzulegen sind, mit Solltemperatur in die erweiterte Kavität eingespritzt wird.

Bevorzugt weist der mindestens eine Heißkanal ein Ventil mit einem Nadelverschluss auf. Ein solcher Nadelverschluss verhindert, dass der Anspritzpunkt des spritzgegossenen Behälters am fertigen Produkt gut sichtbar ist. Dies ist besonders vorteilhaft, wenn die zweite Spritzeinheit, wie bevorzugt, in der Gesenkhälfte der Spritzgussform sitzt, der Anspritzpunkt somit also auf der Außenseite des Behälters liegt.

Da die erste Kunststoffkomponente erfindungsgemäß vor dem Einspritzen mit einem Gas versetzt wird, das beim Hineinfließen der Kunststoffkomponente in die Kavität ein Aufschäumen bewirken soll, ergeben sich besondere Vorteile, wenn insbesondere die erste Spritzeinheit für die erste Kunststoffkomponente mit einem Nadelverschluss versehen ist. Erfindungsgemäß ist erkannt worden, dass ansonsten die Gefahr besteht, dass das Gas durch eine herkömmliche Einspritzdüse vorzeitig in die Kavität hinein entweicht, was den Aufschäumeffekt beeinträchtigen würde. Auch hierbei kann es vorteilhaft sein, wenn zum Einspritzen der ersten Kunststoffkomponente ein Heißkanal verwendet wird.

Um die Verbindungsfläche zwischen der ersten und der zweiten Kunststoffkomponente zu erhöhen und hierdurch die stoffschlüssige Verbindung dauerhafter und widerstandsfähiger zu machen, ist es vorteilhaft, wenn sich die beiden Kunststoffkomponenten im fertigen Behälter, in Draufsicht auf eine Ebene der Behälterwand, überlappen. Im Beispiel eines transparenten Fensters würde dann die transparente zweite Kunststoffkomponente eine größere Fläche aufweisen als das vom Skelett für die zweite Kunststoffkomponente freigelassene Fenster, um die genannte Überlappung zu erzielen. Dementsprechend besteht eine bevorzugte Weiterbildung des erfindungsgemäßen Verfahrens darin, dass die Kavität durch mehrteilige Schieber und/oder durch bewegliche Absperrelemente abgestuft erweitert wird.

Eine zweite Alternative eines erfindungsgemäß ausgestalteten Verfahrens zum Herstellen eines Behälters, der im Wesentlichen aus einer Behälterwand gebildet wird, die einen Innenraum des Behälters definiert, verzichtet auf die Zweikomponenten-Spritzgusstechnik, sondern verwendet zwei verschiedene Spritzgussformen. Hierbei wird wiederum ein Skelett mit einer Bodenfläche und mehreren an diese angeformten Streben oder Teilflächen aus einer ersten Kunststoffkomponente geformt, indem die erste Kunststoffkomponente durch Erhitzen plastifiziert, unter Druck in eine die Form des Skeletts bildende Kavität einer ersten teilbaren Spritzgussform eingespritzt und darin durch Abkühlen verfestigt wird. Danach wird das Skelett durch Öffnen der Spritzgussform entformt und in eine zweite teilbare Spritzgussform verbracht, deren Kavität die Form der Behälterwand aufweist. Nach Schließen dieser zweiten Spritzgussform wird eine zweite Kunststoffkomponente, die ebenfalls durch Erhitzen plastifiziert worden ist, unter Druck in die Kavität der zweiten Spritzgussform eingespritzt und darin durch Abkühlen verfestigt, um das Skelett zur Behälterwand zu vervollständigen.

Auch gemäß dieser zweiten Alternative wird die erste Kunststoffkomponente vor dem Einspritzen mit einem Gas versetzt, das sich beim Einspritzvorgang in der Kavität, also nach dem Verlassen der ersten Spritzeinheit, beim Hineinfließen in die Kavität ausdehnt und hierbei ein Aufschäumen der ersten Kunststoffkomponente bewirkt.

Während die beiden Kunststoffkomponenten üblicherweise aus Thermoplasten wie Polypropylen, Polyethylen und Polyamid bestehen, wird als Gas zum Aufschäumen der ersten Kunststoffkomponente bevorzugt Kohlendioxid (CO₂) verwendet.

Ein Ausführungsbeispiel für einen erfindungsgemäß ausgestalteten Behälter bzw. für ein erfindungsgemäß ausgestaltetes Verfahren wird im Folgenden anhand der beigefügten Zeichnungen näher beschrieben und erläutert. Es zeigen:
- Figur 1: ein Ausführungsbeispiel für einen erfindungsgemäß ausgestalten Behälter in isometrischer Ansicht;
- Figur 2: eine isometrische Ansicht der Spritzgussform bzw. eines Spritzgusswerkzeugs zum Herstellen des Behälters aus Figur 1;
- Figur 3: einen Schnitt durch das Spritzgusswerkzeug aus Figur 2;
- Figur 4: eine schematische isometrische Darstellung eines Details des Spritzgusswerkzeugs aus Figur 3;
- Figur 5: das Detail X aus Figur 3, beim Einspritzen der ersten Kunststoffkomponente;
- Figur 6: das Detail X aus Figur 3, beim Einspritzen der zweiten Kunststoffkomponente;
- Figur 7: das Detail X aus Figur 3, nach dem Einspritzen der zweiten Kunststoffkomponente.

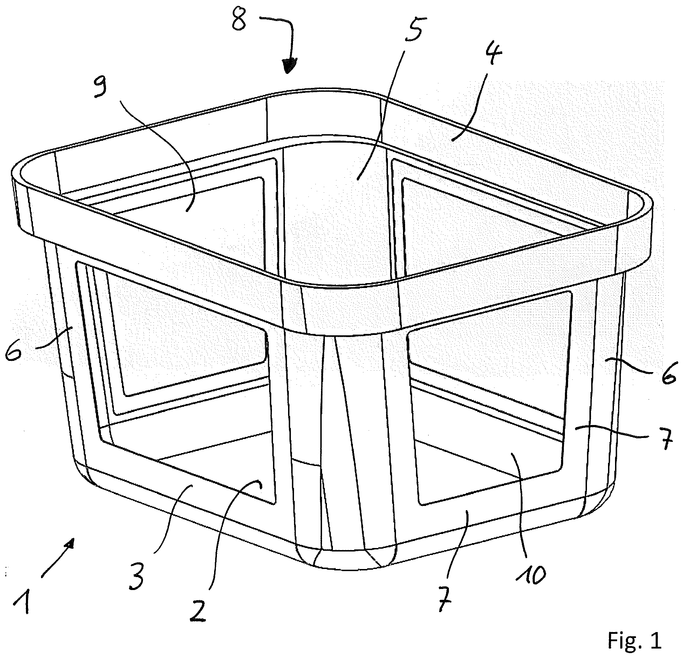

Figur 1 zeigt eine isometrische Ansicht eines erfindungsgemäß ausgestalteten Behälters. Dieser besteht aus einer Behälterwand 1, die in Zweikomponenten-Spritzgusstechnik gefertigt worden ist. Diese Behälterwand 1 bildet einen wannenförmigen Behälter mit quaderförmiger Grundform, der mit einer Bodenfläche 2 und vier Seitenwänden 3 sowie einem umlaufenden oberen Rand 4 einen Innenraum 8 umschließt, der nach oben offen ist. Mit einer ersten Kunststoffkomponente wurde ein Skelett 5 ausgeformt, das erfindungsgemäß aus aufgeschäumtem Kunststoff besteht. Dieses Skelett umfasst die Bodenfläche 2, jeweils eine Strebe 6 in jeder Ecke des Behälters sowie den umlaufenden oberen Rand 4. In den Seitenwänden 3 setzt sich das Skelett 5 jeweils in Teilflächen 7 fort. Diese bilden einen Rahmen für die zweite Kunststoffkomponente 9, die transparent ist und innerhalb der Teilflächen 7 des Skeletts 5 durchsichtige Fenster 10 bildet.

Gemäß der vorliegenden Erfindung besteht das Skelett 5 aus einem aufgeschäumten Kunststoff; es handelt sich in diesem Ausführungsbeispiel um Polypropylen, das mit Kohlendioxid aufgeschäumt worden ist.

Zum Innenraum 8 hin ist erkennbar, dass sich die zweite Kunststoffkomponente 9 und die Teilflächen 7 des Skeletts 5, aus einer senkrecht zur Behälterwandebene stehenden Richtung gesehen, in einem das Fenster 10 umgebenden Bereich überlappen. Die zweite Komponente 9 ist daher besonders gut und langzeitstabil stoffschlüssig am Skelett 5 befestigt.

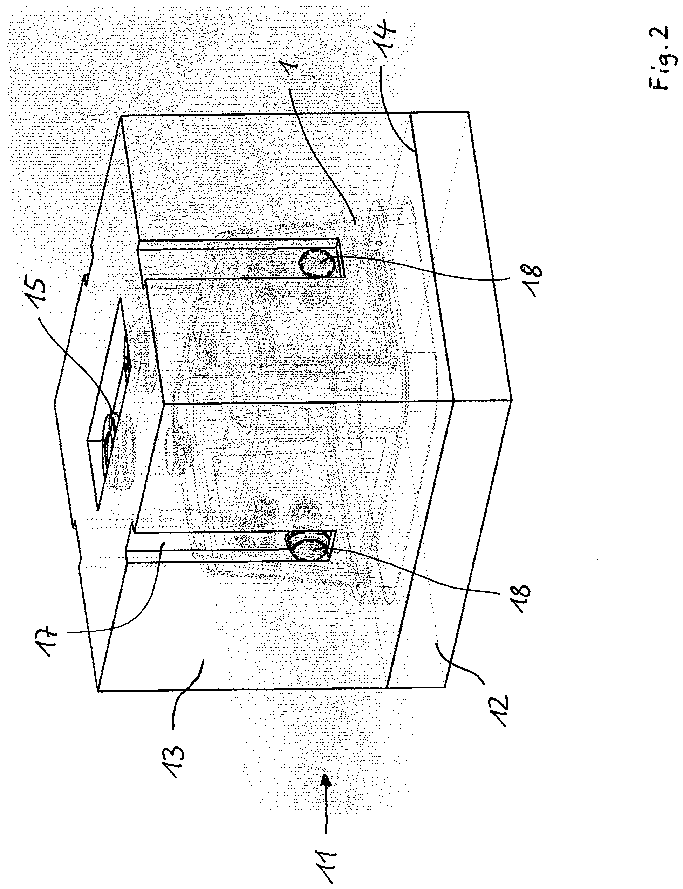

Die Herstellung des in Figur 1 dargestellten Behälters erfolgt in einem Spritzgusswerkzeug, das in Figur 2 in einer isometrischen Darstellung gezeigt ist. Dieses besteht aus der eigentlichen Spritzgussform 11 mit einer Kernhälfte 12 und einer Gesenkhälfte 13, die an einer Trennebene 14 voneinander getrennt werden können, um ein darin ausgeformtes Spritzgussteil entnehmen zu können. Dieses ist mit punktierten Linien angedeutet.

Auf der Oberseite der Spritzgussform 11 ist eine erste Spritzeinheit 15 erkennbar, über die die erste Kunststoffkomponente in eine Kavität 16 eingespritzt wird. An den vier Seitenflächen der Spritzgussform 11 ist eine zweite Spritzeinheit 17 angebracht, von der hier vier Einspritzdüsen 18, für jedes Fenster 10 eine, dargestellt und davon zwei sichtbar sind.

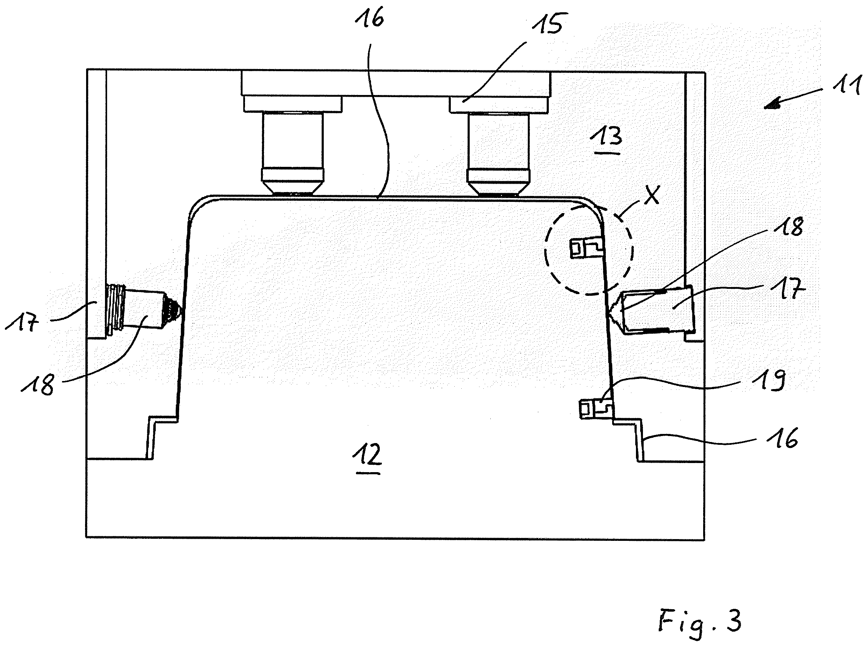

Das "Innenleben" des in Figur 2 gezeigten Teils des Spritzgusswerkzeugs ist in Figur 3, einem Schnitt durch die Figur 2, zu erkennen. Deutlich sichtbar ist die Trennebene 14 zwischen der Kernhälfte 12 und der Gesenkhälfte 13 der Spritzgussform 11. Entlang dieser Trennebene 14 verläuft die Kavität 16, die hier insgesamt ein Negativ der Behälterwand 1 ist, d.h. wenn Kunststoff in die Kavität 16 eingespritzt wird und dort durch Kühlen der Spritzgussform 11 erstarrt, wird ein Behälter in Form der Behälterwand 1 hergestellt.

Die vorliegende Spritzgussform 11 eignet sich für die Zweikomponenten-Spritzgusstechnik. Die hierfür notwendigen separaten Anspritzpunkte werden über die erste Spritzeinheit 15 und die zweite Spritzeinheit 17 mit der ersten Kunststoffkomponente bzw. der zweiten Kunststoffkomponente 9 bedient.

Die erste Spritzeinheit 15 umfasst zwei Heißkanäle mit (nicht sichtbaren) Nadelventilen, über die die erste Kunststoffkomponente in einem ersten Schuss in die Kavität 16 eingespritzt wird. Die zweite Spritzeinheit 17 umfasst vier Spritzdüsen 18, für jedes Fenster 10 des Behälters eine. Auch sie sind in der Gesenkhälfte 13 der Spritzgussform 11 angebracht, die während des Herstellprozesses und insbesondere während des Entformens eines fertigen Behälters an Ort und Stelle verbleibt, während die Kernhälfte 12 bewegt wird, um die Kavität 16 zu öffnen und zu schließen. Um Angüsse zu vermeiden, die wegen des damit verbundenen Materialverlusts nicht optimal sind, sind auch die Spritzdüsen 18 der zweiten Spritzeinheit 17 mit Heißkanälen und Nadelventilen (nicht sichtbar) ausgerüstet. Letztere sorgen dafür, dass die Anspritzpunkte in den Fenstern 10 von außen kaum sichtbar sind.

Beim ersten Schuss, also beim Einspritzen der ersten Kunststoffkomponente, besitzt die Kavität 16 die Umrisse des Skeletts 5 ohne Fenster 10, obwohl der zwischen der Kernhälfte 12 und der Gesenkhälfte 13 gebildete Hohlraum insgesamt der Form der gesamten Behälterwand 1 entspricht.

Hierzu wird die Kavität 16 für den ersten Schuss, die also der Form des Skeletts 5 entspricht, durch rahmenförmige, bewegliche Absperrelemente 19 verkleinert. Diese verhindern, dass die erste Kunststoffkomponente beim ersten Schuss in den Hohlraum gelangen kann, der im fertigen Behälter von der zweiten Kunststoffkomponente 9 eingenommen werden soll.

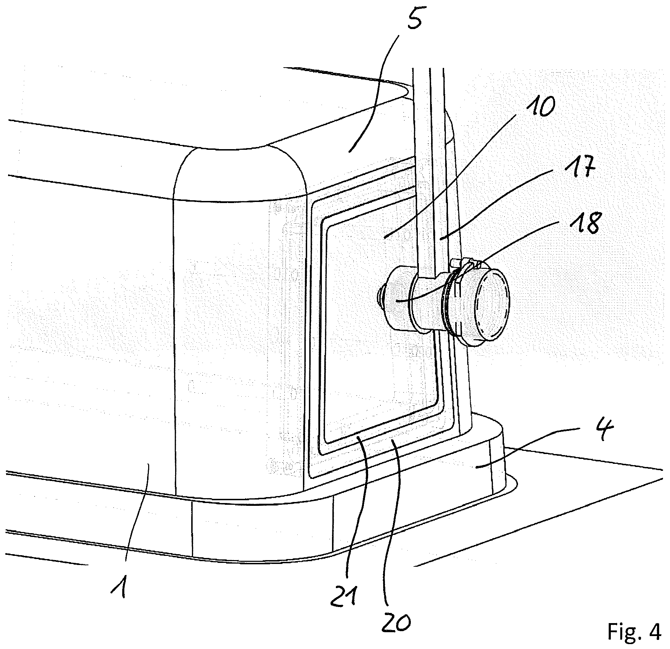

Die Figur 4 zeigt eine schematische Darstellung der in Figur 3 rechts befindlichen Seite der Spritzgussform 11, wobei die Gesenkhälfte 13 weggelassen ist. Hier wird die Position der zweiten Spritzeinheit 17 in Bezug auf die Fenster 10 des Behälters verdeutlicht. Ebenso verdeutlicht wird, dass die Absperrelemente 19 aus einem Konturrahmen 20 und einem Abpressrahmen 21 zusammengesetzt sind, die von der Kernhälfte 12 aus stufenweise bewegt werden können.

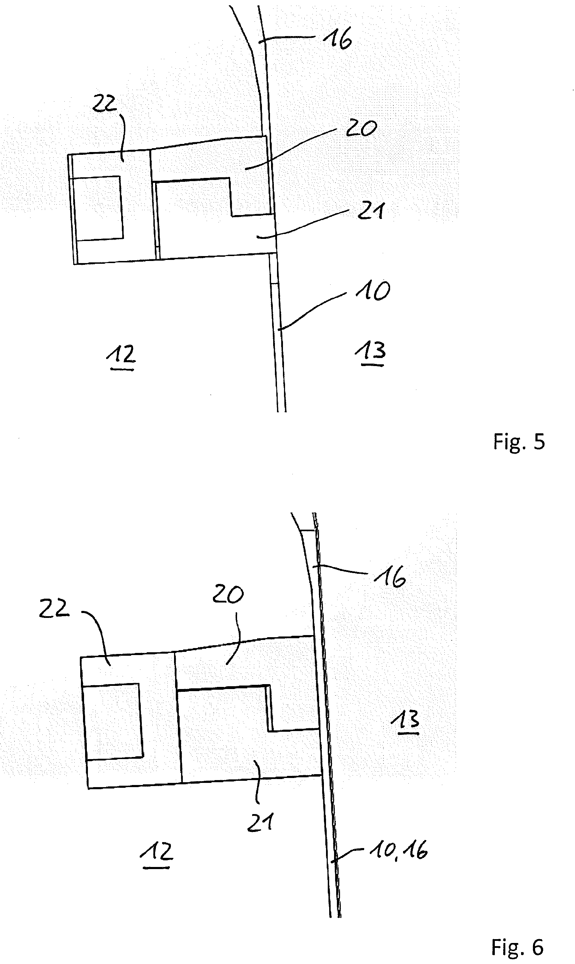

In den Figuren 5 und 6, die das Detail X aus Figur 3 zeigen, sind die Absperrelemente 19 in zwei verschiedenen Zeitpunkten beim Durchführen des erfindungsgemäßen Verfahrens gezeigt, wobei Figur 5 die Situation beim Einspritzen der ersten Kunststoffkomponente und Figur 6 die Situation beim Einspritzen der zweiten Kunststoffkomponente darstellt.

Wie aus den Figuren 5 und 6 hervorgeht, bestehen die beweglichen Absperrelemente 19 nicht nur aus dem Konturrahmen 20 und dem Abpressrahmen 21, sondern umfassen außerdem auch eine Anschlagsrahmenplatte 22, die zusammen mit (nicht dargestellten) Auswerferbolzen für eine abgestufte Bewegung des Konturrahmens 20 und des Abpressrahmens 21 und für eine Unterstützung gegen den Einspritzdruck sorgt.

Zum Einspritzen der ersten Kunststoffkomponente, also für den ersten Schuss, sperrt der Abpressrahmen 21, wie in Figur 5 gezeigt, die Kavität 16 gegen den Hohlraum, der später das Fenster 10 werden soll, so ab, dass die erste Kunststoffkomponente, die in dieser Darstellung von oben in die Kavität 16 fließt, zur Bildung des Skeletts 5 am Abpressrahmen 21 gestoppt wird. Der Konturrahmen 20 ist hierbei zur Hälfte zurückgezogen bzw. er wurde vom Abpressrahmen 21, der von den (nicht dargestellten) Auswerferbolzen bewegt wird, aufgrund eines entsprechenden Spiels zwischen dem Abpressrahmen 21 und dem Konturrahmen 20 nur halb mitgenommen, so dass unmittelbar neben dem Abpressrahmen 21 die Kavität 16 auf etwa die Hälfte der lichten Weite der Kavität 16 reduziert ist.

Für den zweiten Schuss, also zum Einspritzen der zweiten Kunststoffkomponente 9, werden sowohl der Abpressrahmen 21 als auch der Konturrahmen 20 federbelastet bis zum Anschlag an die Anschlagsrahmenplatte 22 vollständig in die Kernhälfte 12 eingezogen (Figur 6), so dass sich die Kavität 16 zur Gesamtform der Behälterwand 1 erweitert. Das Einspritzen der zweiten Kunststoffkomponente 9 erfolgt über die zweite Spritzeinheit 17 vom Fenster 10 her, so dass sich die zweite Kunststoffkomponente 9 im Bereich des Konturrahmens 20, in dem ein Raum hinter der bereits eingespritzten ersten Kunststoffkomponente (dem Skelett 5) entstanden ist, in diesem Bereich hinter die erste Kunststoffkomponente fließt, sich mit dieser überlappt und im Überlappungsbereich eine großflächige stoffschlüssige Verbindung zwischen den beiden Kunststoffkomponenten herstellt, wie sie in Figur 1 sichtbar ist.

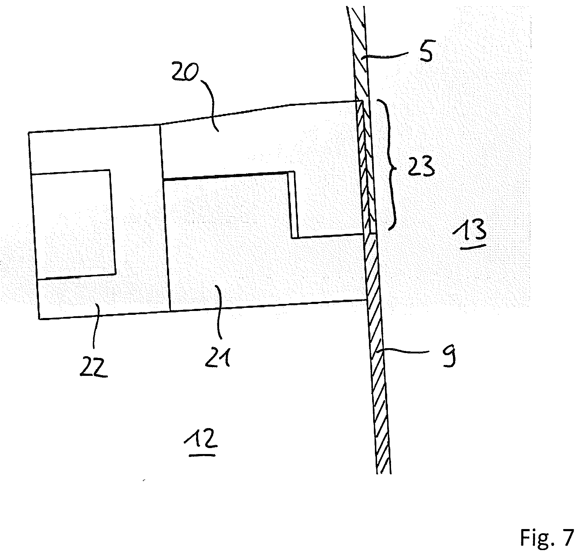

Figur 7 zeigt das Ergebnis: Die zweite Kunststoffkomponente 9 ist in einem Überlappungsbereich 23 hinter das Skelett 5 geflossen und hat sich dort beim Erstarren mit diesem stoffschlüssig verbunden. Die Fläche dieser Verbindung ist, wie auf den ersten Blick zu erkennen ist, um ein Vielfaches größer als sie es wäre, wenn die zweite Kunststoffkomponente 9 und das Skelett 5 nur stumpf aufeinandertreffen würden.

## Patentansprüche

1. Behälter aus spritzgegossenem Kunststoff, im Wesentlichen bestehend aus einer Behälterwand (1), die einen Innenraum (8) des Behälters definiert, mit einer ersten Kunststoffkomponente, aus der ein Skelett (5) mit einer Bodenfläche (2) und mehreren an diesen angeformten Streben (6) und/oder Teilflächen (7) gebildet ist, sowie mit mindestens einer zweiten Kunststoffkomponente (9), die das Skelett (5) zur Behälterwand (1) vervollständigt,
**dadurch gekennzeichnet,**
**dass** das Skelett (5) aus aufgeschäumtem Kunststoff besteht.

2. Behälter nach Anspruch 1, wobei die zweite Kunststoffkomponente (9) mittels Zweikomponenten-Spritzgusstechnik mit der ersten Kunststoffkomponente verbunden ist.

3. Behälter nach Anspruch 2, wobei die erste und die zweite Kunststoffkomponente (9), senkrecht zu einer Ebene der Behälterwand (1) gesehen, sich in einem Überlappungsbereich (23) überlappen.

4. Behälter nach mindestens einem der Ansprüche 1 bis 3, wobei die zweite Kunststoffkomponente (9) ein transparenter Kunststoff ist.

5. Behälter nach mindestens einem der Ansprüche 1 bis 4, wobei das Skelett (5) einen umlaufenden oberen Rand (4) des Behälters umfasst.

6. Behälter nach mindestens einem der Ansprüche 1 bis 5, wobei das Skelett (5) eine Materialstärke von mindestens 2 mm, vorzugsweise von 2,5 mm bis 4 mm, besonders bevorzugt von 2,8 bis 3,2 mm aufweist.

7. Behälter nach mindestens einem der Ansprüche 1 bis 6, wobei die zweite Kunststoffkomponente (9) eine Materialstärke von höchstens 1,8 mm, vorzugsweise von höchstens 1,5 mm, besonders bevorzugt von 0,8 bis 1,2 mm aufweist.

8. Verfahren zum Herstellen eines Behälters, insbesondere nach mindestens einem der Ansprüche 1 bis 7, der im Wesentlichen aus einer Behälterwand (1) gebildet wird, die einen Innenraum (8) des Behälters definiert, wobei ein Skelett (5) mit einer Bodenfläche (2) und mehreren an diesen angeformten Streben (6) und/oder Teilflächen (7) aus einer ersten Kunststoffkomponente geformt wird, indem die erste Kunststoffkomponente durch Erhitzen plastifiziert, unter Druck über eine erste Spritzeinheit (15) in eine die Form des Skeletts (5) bildende Kavität (16) einer teilbaren Spritzgussform (11) mit einer Kernhälfte (12) und einer Gesenkhälfte (13) eingespritzt und darin durch Abkühlen verfestigt wird,
wobei nach dem Einspritzen der ersten Kunststoffkomponente die Kavität (16) zur Form der Behälterwand (1) erweitert wird, und
wobei eine zweite Kunststoffkomponente (9) durch Erhitzen plastifiziert, unter Druck über eine zweite Spritzeinheit (17) in die erweiterte Kavität (16) eingespritzt und darin durch Abkühlen verfestigt wird, um das Skelett (5) zur Behälterwand (1) zu vervollständigen,
**dadurch gekennzeichnet,**
**dass** die erste Kunststoffkomponente vor dem Einspritzen mit einem Gas versetzt wird, das sich beim Einspritzvorgang nach dem Verlassen der ersten Spritzeinheit (15) in der Kavität (16) ausdehnt und hierbei ein Aufschäumen der ersten Kunststoffkomponente bewirkt.

9. Verfahren nach Anspruch 8, wobei zur Erweiterung der Kavität (16) Schieber oder bewegliche Absperrelemente (19) verwendet werden, die vorzugsweise an der Kernhälfte (12) der Spritzgussform (11) angeordnet sind.

10. Verfahren nach Anspruch 9, wobei die Kavität (16) durch mehrteilige Schieber und/oder Absperrelemente (19) abgestuft erweitert wird.

11. Verfahren nach einem der Ansprüche 9 oder 10, wobei die verwendete zweite Spritzeinheit (17) mit mindestens einem Heißkanal versehen ist.

12. Verfahren zum Herstellen eines Behälters, insbesondere nach mindestens einem der Ansprüche 1 bis 7, der im Wesentlichen aus einer Behälterwand (1) gebildet wird, die einen Innenraum (8) des Behälters definiert, wobei ein Skelett (5) mit einer Bodenfläche (2) und mehreren an diesen angeformten Streben (6) und/oder Teilflächen (7) aus einer ersten Kunststoffkomponente geformt wird, indem die erste Kunststoffkomponente durch Erhitzen plastifiziert, unter Druck in eine die Form des Skeletts (5) bildende Kavität (16) einer ersten teilbaren Spritzgussform (11) eingespritzt und darin durch Abkühlen verfestigt wird,
wonach das Skelett (5) in eine zweite teilbare Spritzgussform verbracht wird, deren Kavität die Form der Behälterwand (1) aufweist, und
wobei eine zweite Kunststoffkomponente (9) durch Erhitzen plastifiziert, unter Druck in die Kavität der zweiten teilbaren Spritzgussform eingespritzt und darin durch Abkühlen verfestigt wird, um das in der Kavität befindliche Skelett (5) zur Behälterwand (1) zu vervollständigen, **dadurch gekennzeichnet,**
**dass** die erste Kunststoffkomponente vor dem Einspritzen mit einem Gas versetzt wird, das sich beim Einspritzvorgang nach dem Verlassen der ersten Spritzeinheit (15) in der Kavität (16) ausdehnt und hierbei ein Aufschäumen der ersten Kunststoffkomponente bewirkt.

13. Verfahren nach mindestens einem der Ansprüche 8 bis 12, wobei die verwendete erste Spritzeinheit (15) ein Ventil mit einem Nadelverschluss aufweist.

14. Verfahren nach mindestens einem der Ansprüche 8 bis 13, wobei als Gas Kohlendioxid verwendet wird.
